# EUROPÄISCHE PATENTANMELDUNG

(11) **EP 4 793 920 A1**
(43) Veröffentlichungstag der Anmeldung: **19.08.2026**
(21) Anmeldenummer: 25157489.3
(22) Anmeldetag: 12.02.2025
(51) Int. Cl.: G08G 1/005, G06V 20/54, G08G 1/015, G08G 1/017, G08G 1/04, H04W 4/02, G08G 1/127

(54) **VERFAHREN ZUM ERMITTELN VON VERKEHRSDATEN EINES VERKEHRSMITTELS**

(71) Anmelder: Deutsche Telekom AG, 53113 Bonn (DE)
(72) Erfinder: MINOW, Jascha, 64625 Bensheim (DE)
(74) Vertreter: RDL Patentanwälte PartG mbB

(57) **Zusammenfassung**

Verfahren zum Ermitteln von Verkehrsdaten eines Verkehrsmittels, bei dem ein mit einem Mobilfunknetz verbundenes mobiles Endgerät eine einen gegenwärtigen Zeitpunkt und eine Position des mobilen Endgeräts zu dem gegenwärtigen Zeitpunkt bestimmende Anfrage über das Mobilfunknetz zu einem Server übermittelt und von dem Server eine Antwort mit Verkehrsdaten eines zu dem gegenwärtigen Zeitpunkt in einer Umgebung der Position angeordneten Verkehrsmittels über das Mobilfunknetz in Echtzeit empfängt, sowie System zum Ermitteln von Verkehrsdaten eines Verkehrsmittels und Computerprogrammprodukt.

## Beschreibung

Die Erfindung betrifft ein Verfahren zum Ermitteln von Verkehrsdaten eines Verkehrsmittels, bei dem ein mit einem Mobilfunknetz verbundenes mobiles Endgerät eine einen gegenwärtigen Zeitpunkt und eine Position des mobilen Endgeräts zu dem gegenwärtigen Zeitpunkt bestimmende Anfrage über das Mobilfunknetz zu einem Server übermittelt und von dem Server eine Antwort mit Verkehrsdaten eines zu dem gegenwärtigen Zeitpunkt in einer Umgebung der Position angeordneten Verkehrsmittels über das Mobilfunknetz in Echtzeit empfängt. Ferner betrifft die Erfindung ein System zum Ermitteln von Verkehrsdaten eines Verkehrsmittels und ein Computerprogrammprodukt.

Verfahren der eingangs genannten Art gehören in unterschiedlichen Ausgestaltungen zum Stand der Technik und dienen dazu, ein Verkehrsmittel zu identifizieren und darüber hinaus Daten betreffend seine momentane Fahrt zu ermitteln. Ein solches Verfahren verwendet üblicherweise eine Position des mobilen Endgeräts, d.h., einen gegenwärtigen Standort eines Nutzers des mobilen Endgeräts, und einen Zeitpunkt, d.h. den Zeitpunkt der Anfrage, um einen Raumbereich als eine Umgebung der Position zu definieren, in dem das Verkehrsmittel gegenwärtig angeordnet ist.

Gewöhnlich umfasst das mobile Endgerät ein dediziertes Applikationsfrontend, kurz App, das über das Mobilfunknetz mit einem von dem Server bereitgestellten dedizierten Applikationsbackend kommuniziert. Unter dem Verkehrsmittel ist hier ein frei bewegliches Fahrzeug zu verstehen, das Personen oder Waren transportiert.

Dabei kann ein Interesse des Nutzers an den Verkehrsdaten einerseits zweckfrei auf einer Neugier des Nutzers beruhen. Andererseits kann der Nutzer während einer Reise unterwegs an den Verkehrsdaten interessiert sein, um festzustellen, ob ein in einer Sichtweite angeordnetes aber visuell nicht identifizierbares Verkehrsmittel für die Reise relevant ist, beispielsweise während eines Umsteigens in ein anderes Verkehrsmittel, das wegen einer Fehlfunktion oder wegen eines Standorts des Nutzers relativ zu dem Verkehrsmittel seine Identität nicht erkennen lässt.

Entsprechende Beispiele für den Luftverkehr und die Schifffahrt sind die Applikationen flightradar24 bzw. MarineTraffic. Jedoch sind bekannte Verfahren kaum geeignet, um während einer Reise ein für die Reise relevantes Verkehrsmittel zu erkennen und ggf. von einem für die Reise irrelevanten Verkehrsmittel zu unterscheiden.

Es ist eine Aufgabe der Erfindung, ein Verfahren zum Ermitteln von Verkehrsdaten eines Verkehrsmittels vorzuschlagen, das während einer Reise ein effizientes und verlässliches Erkennen eines relevanten Verkehrsmittels sowie Unterscheiden eines relevanten Verkehrsmittels von einem irrelevanten Verkehrsmittel ermöglicht. Weitere Aufgaben der Erfindung bestehen darin, ein System zum Ermitteln von Verkehrsdaten eines Verkehrsmittels und ein Computerprogrammprodukt bereitzustellen.

Ein Gegenstand der Erfindung ist ein Verfahren zum Ermitteln von Verkehrsdaten eines Verkehrsmittels, bei dem ein mit einem Mobilfunknetz verbundenes mobiles Endgerät eine einen gegenwärtigen Zeitpunkt und eine Position des mobilen Endgeräts zu dem gegenwärtigen Zeitpunkt bestimmende Anfrage über das Mobilfunknetz zu einem Server übermittelt und von dem Server eine Antwort mit Verkehrsdaten eines zu der Anfrage korrespondierenden Verkehrsmittels über das Mobilfunknetz in Echtzeit empfängt. Das mobile Endgerät kann die Position mittels eines Global Navigation Satellite System, GNSS,-Empfängers des mobilen Endgeräts, beispielsweise eines Empfängers für Global Positioning System, GPS, oder Galileo, ermitteln. Alternativ oder zusätzlich kann der Server die Position des mobilen Endgeräts mittels Triangulierens und/oder mittels eines Lokalisierungsservers des Mobilfunknetzes ermitteln. Wenn die Position des mobilen Endgeräts auf mehrere Weisen ermittelt wird, kann die Position verifiziert oder eine Präzision der ermittelten Position erhöht werden.

Die mit der Antwort empfangenen Verkehrsdaten ermöglichen es einem Nutzer des mobilen Endgeräts zu entscheiden, ob das zu der Anfrage korrespondierende Verkehrsmittel für eine Reise des Nutzers relevant ist, d.h. ob es zu der Reise des Nutzers passt oder für die Reise des Nutzers benötigt wird.

Erfindungsgemäß erfasst das mobile Endgerät zu dem gegenwärtigen Zeitpunkt mittels einer Kamera des mobilen Endgeräts ein Bild des Verkehrsmittels, erkennt das mobile Endgerät anhand des erfassten Bilds das Verkehrsmittel und übermittelt das mobile Endgerät eine Beschreibung des Verkehrsmittels mit der Anfrage. Die übermittelte Anzeige umfasst also zusätzlich zu der Position des mobilen Endgeräts und dem gegenwärtigen Zeitpunkt die Beschreibung des mit der Kamera aufgenommenen Verkehrsmittels. Die Beschreibung kann einen Typ des Verkehrsmittels, eine Entfernung des Verkehrsmittels von dem mobilen Endgerät zu dem gegenwärtigen Zeitpunkt, eine Größe des Verkehrsmittels, eine Form des Verkehrsmittels, eine Farbe des Verkehrsmittels und dergleichen umfassen. Die Größe und die Position des Verkehrsmittels können anhand des Typs des Verkehrsmittels und einer Brennweite der Kamera ermittelt werden. Die aus dem erfassten Bild abgeleitete Beschreibung bestimmt also das bei dem Server angefragte Verkehrsmittel.

Das mobile Endgerät kann das aufgenommene Verkehrsmittel mittels eines Mustererkennungsalgorithmus oder eines künstlichen neuronalen Netzes erkennen.

Der Nutzer kann praktisch instantan die Verkehrsdaten des abgebildeten Verkehrsmittels erhalten und unmittelbar entscheiden, ob das abgebildete Verkehrsmittel für die Reise relevant ist oder nicht. Im positiven Fall kann der Nutzer das Verkehrsmittel zielstrebig ansteuern und riskiert nicht, das Verkehrsmittel wegen Nichterkennens der Relevanz des Verkehrsmittels zu verpassen.

Das mobile Endgerät kann die Beschreibung eines Straßenfahrzeugs, eines Schienenfahrzeugs, eines Wasserfahrzeugs und/oder eines Luftfahrzeugs als Verkehrsmittel übermitteln. Ein für den Nutzer interessantes typisches Straßenfahrzeug ist ein Bus, ein für den Nutzer interessantes typisches Schienenfahrzeug ist ein Zug, ein für den Nutzer interessantes typisches Wasserfahrzeug ist ein Schiff, insbesondere eine Fähre, ein für den Nutzer interessantes typisches Luftfahrzeug ist ein Flugzeug.

Insbesondere kann das mobile Endgerät die Beschreibung mittels zweier erfasster Bilder bestimmen. Die beiden Bilder können zwei Rahmen (Frames) eines mittels der Kamera aufgenommenen Videos sein. Wenn ein zeitlicher Abstand der beiden Bilder bekannt und genügend groß ist, lässt sich anhand einer Verschiebung und/oder Größenänderung des Verkehrsmittels eine Fahrtgeschwindigkeit und/oder eine Fahrtrichtung des Verkehrsmittels ermitteln.

Alternativ oder zusätzlich kann das mobile Endgerät die Beschreibung mittels einer Orientierung des mobilen Endgeräts bestimmen. Das mobile Endgerät kann die Orientierung mittels eines Gyrosensors des mobilen Endgeräts ermitteln. Anhand der Position und der Orientierung des mobilen Endgeräts sowie der Entfernung des Verkehrsmittels von dem Endgerät kann eine Position des Verkehrsmittels ermittelt werden. Die Beschreibung des Verkehrsmittels kann die Position des Verkehrsmittels umfassen.

Unabhängig davon kann aus dem Bild eine Orientierung des Verkehrsmittels relativ zu einer Orientierung des mobilen Endgeräts und damit eine räumliche Ausrichtung des Verkehrsmittels ermittelt werden. Die Beschreibung des Verkehrsmittels kann die räumliche Ausrichtung des Verkehrsmittels umfassen.

Vorteilhaft bestimmt das mobile Endgerät das Verkehrsmittel anhand einer Auswahlmarkierung. Das erfasste Bild kann mehr als ein Verkehrsmittel abbilden. Insbesondere in diesem Fall kann ein Nutzer des mobilen Endgeräts ein anzufragendes Verkehrsmittel durch ein Tippen in das von dem mobilen Endgerät angezeigten Bild auswählen und das Bild durch das Tippen um eine Auswahlmarkierung erweitern.

In einer Ausführungsform empfängt das mobile Endgerät einen Herkunftsort, einen dem Herkunftsort zugeordneten Startzeitpunkt, einen Zielort, einen dem Zielort zugeordneten Endzeitpunkt und/oder einen Identifikator des Verkehrsmittels als die Verkehrsdaten. Der Identifikator des Verkehrsmittels kann beispielsweise eine Buslinie, eine Bahnlinie oder eine Flugnummer sein. Die weiteren Angaben, insbesondere der Zielort, lassen den Nutzer unmittelbar die Relevanz oder Irrelevanz des Verkehrsmittels erkennen.

Günstigerweise empfängt das mobile Endgerät in der Antwort einen den empfangenen Verkehrsdaten zugeordneten Wahrscheinlichkeitswert. Der Wahrscheinlichkeitswert liegt beispielsweise in einem Bereich zwischen 0% und 100% und gibt an, wie sicher die übermittelten Verkehrsdaten des angefragten Verkehrsmittels sind. Dabei bedeuten wie üblich niedrige Prozentzahlen eine geringe Sicherheit und hohe Prozentzahlen eine große Sicherheit der übermittelten Verkehrsdaten.

Vorteilhaft zeigt das mobile Endgerät die empfangenen Verkehrsdaten an. Auf diese Weise erkennt der Nutzer auf einen Blick die Relevanz oder Irrelevanz des angefragten Verkehrsmittels. Wenn der Wahrscheinlichkeitswert angezeigt wird, erkennt der Nutzer zusätzlich eine Verlässlichkeit der ermittelten Relevanz oder Irrelevanz.

Das mobile Endgerät kann eine Antwort mit Verkehrsdaten einer Mehrzahl von zu der Anfrage korrespondierenden Verkehrsmitteln empfangen. In diesem Fall kann das mobile Endgerät nur die Verkehrsdaten des wahrscheinlichsten Verkehrsmittels, d.h. die Verkehrsdaten mit dem höchsten Wahrscheinlichkeitswert, oder mehrere oder sämtliche Verkehrsdaten geordnet nach und mit den jeweiligen Wahrscheinlichkeitswerten anzeigen.

Bevorzugt stellt ein Betreiber des Mobilfunknetzes den Server als einen Knoten des Mobilfunknetzes bereit und empfängt der Server die Verkehrsdaten von einer durch die Beschreibung bestimmten Datenbank. Die Datenbank stellt idealerweise ein Application Programming Interface, API, für einen externen Zugriff auf in der Datenbank gespeicherte Verkehrsdaten bereit.

In einer Ausführungsform werden die Verkehrsdaten eines öffentlichen Verkehrsmittels ermittelt und stellt ein Betreiber des öffentlichen Verkehrsmittels die Datenbank bereit. Das öffentliche Verkehrsmittel gehört üblicherweise zu einer Flotte einer Verkehrsgesellschaft und pendelt auf einer vorbestimmten Fahrstrecke zwischen zwei Endhaltestellen nach einem vorbestimmten Fahrplan. Der vorbestimmte Fahrplan definiert Abfahrtszeiten bzw. Ankunftszeiten des öffentlichen Verkehrsmittels an den Endhaltestellen sowie ggf. an Zwischenhaltestellen auf der vorbestimmten Fahrstrecke.

In einer weiteren Ausführungsform werden die Verkehrsdaten eines privaten Verkehrsmittels ermittelt und stellt ein Betreiber des privaten Verkehrsmittels die Verbindungsdaten in der Datenbank bereit. Auf diese Weise können private Verkehrsmittel, beispielsweise private Personenkraftwagen, Pkw, in dem Verfahren berücksichtigt werden. Die Datenbank kann ebenfalls von dem Betreiber des Mobilfunknetzes oder von einem anderen Anbieter bereitgestellt werden.

In diesem Fall kann sogar ein Fußgänger als Verkehrsmittel im Sinne der Erfindung angesehen werden, wenn er seine Verkehrsdaten in der Datenbank bereitstellt. Wenn ein Nutzer des mobilen Endgeräts beispielsweise den Zielort des Fußgängers kennt, kann er den Fußgänger um einen Botendienst bitten.

Die bestimmte Datenbank kann eine auf Echtzeit-Daten beruhende Antwort oder eine auf statischen Daten beruhende Antwort übermitteln. Beispielsweise kann eine Verkehrsgesellschaft gegenwärtige Standorte aller Verkehrsmittel der Flotte erfassen und in der Datenbank speichern. Alternativ oder zusätzlich kann die Verkehrsgesellschaft statische Fahrpläne der Verkehrsmittel der Flotte in der Datenbank speichern.

Noch ein Gegenstand der Erfindung ist ein System zum Ermitteln von Verkehrsdaten eines Verkehrsmittels, umfassend ein Mobilfunknetz, ein mobiles Endgerät mit einer Kamera und einen mit dem Mobilfunknetz verbundenen Server. Das System ermöglicht einer Vielzahl von Nutzern ein besonders einfaches Ermitteln der Verkehrsdaten des Verkehrsmittels allein durch Nutzen des mobilen Endgeräts und des Mobilfunknetzes.

Erfindungsgemäß ist das System konfiguriert, ein Verfahren nach einer Ausführungsform der Erfindung auszuführen. Der Nutzer kann während einer Reise effizient und verlässlich ein für die Reise relevantes Verkehrsmittel erkennen sowie ggf. das erkannte relevante Verkehrsmittel von einem für die Reise irrelevanten Verkehrsmittel unterscheiden.

Ein weiterer Gegenstand der Erfindung ist ein Computerprogrammprodukt, umfassend ein digitales Speichermedium mit einem Programmcode. Das digitale Speichermedium kann als ein Arbeitsspeicher (Random Access Memory, RAM) eine CD (Compact Disk), eine DVD (Digital Versatile Disk), ein USB (Universal Serial Bus)-Stick, eine Festplatte, ein Cloudspeicher und dergleichen ausgebildet sein.

Erfindungsgemäß veranlasst der Programmcode eine Rechenvorrichtung dazu, zum Ermitteln von Verkehrsdaten eines Verkehrsmittels an einem Verfahren nach einer Ausführungsform der Erfindung als der Server mitzuwirken, wenn es von einem Prozessor der Rechenvorrichtung ausgeführt wird. Das Computerprogrammprodukt erlaubt einem Betreiber eines Mobilfunknetzes, einen Knoten des Mobilfunknetzes zu implementieren, der einen von jedem mit dem Mobilfunknetz verbundenen mobilen Endgerät nutzbaren Verkehrsdatenlieferdienst bereitstellt.

Ein wesentlicher Vorteil des erfindungsgemäßen Verfahrens besteht darin, dass es während einer Reise ein effizientes und verlässliches Erkennen eines für die Reise relevanten Verkehrsmittels sowie ein Unterscheiden eines für die Reise relevanten Verkehrsmittels von einem für die Reise irrelevanten Verkehrsmittel ermöglicht. Abgesehen davon wird durch das erfindungsgemäße Verfahren ein Funktionsumfang des Mobilfunknetzes vergrößert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

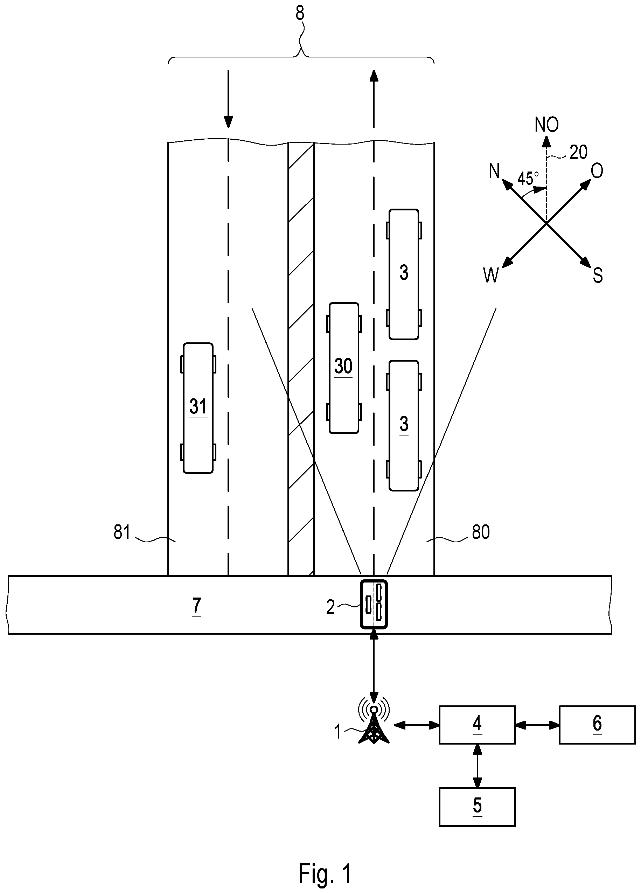

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einer Draufsicht eine Verkehrssituation und in einem Entitätendiagramm ein System nach einer Ausführungsform der Erfindung zum Ermitteln von Verkehrsdaten eines Verkehrsmittels.

Fig. 1 zeigt in einer Draufsicht eine Verkehrssituation. Die Verkehrssituation umfasst eine Fußgängerbrücke 7 und eine Straße 8 mit zwei getrennten entgegengesetzte Fahrtrichtungen definierenden Fahrbahnen 80, 81, die von der Fußgängerbrücke 7 überspannt wird. Auf einer ersten Fahrbahn 80 sind zwei Verkehrsmittel 3, 30 und auf einer zweiten Fahrbahn 81 ist ein Verkehrsmittel 31 angeordnet. Selbstverständlich ist die gezeigte Verkehrssituation lediglich beispielhaft und nicht einschränkend.

Ferner zeigt Fig. 1 in einem Entitätendiagramm ein System nach einer Ausführungsform der Erfindung zum Ermitteln von Verkehrsdaten eines Verkehrsmittels 3, 30, 31. Das System umfasst ein Mobilfunknetz 1, ein mobiles Endgerät 2 mit einer Kamera, einen mit dem Mobilfunknetz 1 verbundenen Server 4, eine Datenbank 5 und einen Lokalisierungsserver 6 zum Ermitteln einer Position des mobilen Endgeräts 2.

Das mobile Endgerät 2 ist lediglich beispielhaft und nicht einschränkend auf der Fußgängerbrücke 7 angeordnet. Es versteht sich, dass ein nicht dargestellter Nutzer des mobilen Endgeräts 2 in diesem Fall ebenfalls auf der Fußgängerbrücke 7 angeordnet ist.

Das mobile Endgerät 2 kann derart orientiert sein, dass die Kamera auf die erste Fahrbahn 80 gerichtet ist. Eine Orientierung 20 einer optischen Achse der Kamera kann 45° betragen, d.h. die optische Achse erstreckt sich Richtung Nordost.

Das System ist konfiguriert, ein Verfahren nach einer Ausführungsform der Erfindung wie folgt auszuführen. Der Server 4 kann mittels eines Computerprogrammprodukts implementiert sein, das ein digitales Speichermedium mit einem Programmcode umfasst. Der Programmcode veranlasst eine Rechenvorrichtung dazu, zum Ermitteln von Verkehrsdaten eines Verkehrsmittels 3, 30, 31 das folgende erfindungsgemäße Verfahren auszuführen, wenn es von einem Prozessor der Rechenvorrichtung ausgeführt wird.

Das mit dem Mobilfunknetz 1 verbundene mobile Endgerät 2 übermittelt eine Anfrage, die einen gegenwärtigen Zeitpunkt und eine Position des mobilen Endgeräts 2 zu dem gegenwärtigen Zeitpunkt bestimmt, über das Mobilfunknetz 1 zu dem Server 4. Bevorzugt stellt ein Betreiber des Mobilfunknetzes 1 den Server 4 als einen Knoten des Mobilfunknetzes 1 bereit. Die Position kann mittels eines Global Navigation Satellite System, GNSS,-Empfängers des mobilen Endgeräts 2 und/oder von einem Lokalisierungsserver des Mobilfunknetzes 1 ermittelt werden.

Das mobile Endgerät 2 erfasst zu dem gegenwärtigen Zeitpunkt mittels einer Kamera des mobilen Endgeräts 2 ein Bild des Verkehrsmittels 3, erkennt anhand des erfassten Bilds das Verkehrsmittel 3, beispielsweise mittels eines Musterkennungsalgorithmus oder eines künstlichen neuronalen Netzes, und übermittelt eine Beschreibung des erkannten Verkehrsmittels mit der Anfrage. Das mobile Endgerät 2 kann die Beschreibung auch mittels zweier erfasster Bilder bestimmen. Das mobile Endgerät 2 kann die Beschreibung zusätzlich mittels einer Orientierung des mobilen Endgeräts 2 bestimmen.

Hier wird lediglich beispielhaft die Beschreibung des Verkehrsmittels 3 mit der Anfrage übermittelt. Das Verkehrsmittel 3 ist in Fahrt abgebildet und erreicht zu unterschiedlichen Zeitpunkten, d.h. in zwei mit einem zeitlichen Abstand erfassten Bildern, zwei unterschiedliche Positionen. Alternativ kann auch eine Beschreibung des Verkehrsmittels 30 oder des Verkehrsmittels 31 mit der Anfrage übermittelt werden. Das mobile Endgerät 2 kann die Beschreibung eines Straßenfahrzeugs, hier insbesondere eines Busses, eines Schienenfahrzeugs, eines Wasserfahrzeugs und/oder eines Luftfahrzeugs übermitteln.

Ferner kann das mobile Endgerät 2 das Verkehrsmittel 3 anhand einer Auswahlmarkierung bestimmen. Das ist nützlich, wenn das erfasste Bild mehr als ein Verkehrsmittel abbildet, hier beispielsweise die Verkehrsmittel 3, 30. Der Nutzer kann die Auswahlmarkierung durch Tippen auf einen Anzeigeschirm des mobilen Endgeräts 2 platzieren, insbesondere durch Tippen auf das Verkehrsmittel in einem von dem Anzeigeschirm angezeigten Bild der Kamera.

Das mobile Endgerät 2 empfängt von dem Server 4 eine Antwort mit Verkehrsdaten eines zu der Anfrage korrespondierenden Verkehrsmittels 3 über das Mobilfunknetz 1 in Echtzeit. Das mobile Endgerät 2 kann eine Antwort mit Verkehrsdaten einer Mehrzahl von zu der Anfrage korrespondierenden Verkehrsmitteln 3 empfangen.

Bevorzugt empfängt der Server 4 die Verkehrsdaten von einer durch die Beschreibung bestimmten Datenbank 5. Hier werden die Verkehrsdaten eines öffentlichen Verkehrsmittels 3 ermittelt und stellt ein Betreiber des öffentlichen Verkehrsmittels 3 die Datenbank 5 bereit.

Alternativ können die Verkehrsdaten eines privaten Verkehrsmittels ermittelt werden und kann ein Betreiber des privaten Verkehrsmittels die Verkehrsdaten in der Datenbank 5 bereitstellen.

Die bestimmte Datenbank 5 kann eine auf Echtzeit-Daten beruhende Antwort oder eine auf statischen Daten beruhende Antwort übermitteln.

Insbesondere kann das mobile Endgerät 2 einen Herkunftsort, einen dem Herkunftsort zugeordneten Startzeitpunkt, einen Zielort, einen dem Zielort zugeordneten Endzeitpunkt und/oder einen Identifikator des Verkehrsmittels 3 als die Verkehrsdaten empfangen. Das mobile Endgerät 2 kann ferner in der Antwort einen den empfangenen Verkehrsdaten zugeordneten Wahrscheinlichkeitswert empfangen.

Idealerweise zeigt das mobile Endgerät 2 die empfangenen Verkehrsdaten an.

### Bezugszeichenliste

- 1: Mobilfunknetz
- 2: mobiles Endgerät
- 20: Orientierung
- 3: Verkehrsmittel
- 30: Verkehrsmittel
- 31: Verkehrsmittel
- 4: Server
- 5: Datenbank
- 6: Lokalisierungsserver
- 7: Fußgängerbrücke
- 8: Straße
- 80: erste Fahrbahn
- 81: zweite Fahrbahn

## Patentansprüche

1. Verfahren zum Ermitteln von Verkehrsdaten eines Verkehrsmittels (3), bei dem
- ein mit einem Mobilfunknetz (1) verbundenes mobiles Endgerät (2) eine einen gegenwärtigen Zeitpunkt und eine Position des mobilen Endgeräts (2) zu dem gegenwärtigen Zeitpunkt bestimmende Anfrage über das Mobilfunknetz (1) zu einem Server (4) übermittelt und von dem Server (4) eine Antwort mit Verkehrsdaten eines zu der Anfrage korrespondierenden Verkehrsmittels (3) über das Mobilfunknetz (1) in Echtzeit empfängt;
- das mobile Endgerät (2) zu dem gegenwärtigen Zeitpunkt mittels einer Kamera des mobilen Endgeräts (2) ein Bild des Verkehrsmittels (3) erfasst, anhand des erfassten Bilds das Verkehrsmittel (3) erkennt und eine Beschreibung des erkannten Verkehrsmittels mit der Anfrage übermittelt.

2. Verfahren nach Anspruch 1, bei dem das mobile Endgerät (2) die Beschreibung eines Straßenfahrzeugs, eines Schienenfahrzeugs, eines Wasserfahrzeugs und/oder ein Luftfahrzeugs übermittelt.

3. Verfahren nach Anspruch 1 oder 2, bei dem das mobile Endgerät (2) die Beschreibung anhand zweier erfasster Bilder bestimmt.

4. Verfahren nach einem der Ansprüche 1 bis 3, bei dem das mobile Endgerät (2) die Beschreibung mittels einer Orientierung des mobilen Endgeräts (2) bestimmt.

5. Verfahren nach einem der Ansprüche 1 bis 4, bei dem das mobile Endgerät (2) das Verkehrsmittel (3) anhand einer Auswahlmarkierung bestimmt.

6. Verfahren nach einem der Ansprüche 1 bis 5, bei dem das mobile Endgerät (2) einen Herkunftsort, einen dem Herkunftsort zugeordneten Startzeitpunkt, einen Zielort, einen dem Zielort zugeordneten Endzeitpunkt und/oder einen Identifikator des Verkehrsmittels (3) als die Verkehrsdaten empfängt.

7. Verfahren nach Anspruch 6, bei dem das mobile Endgerät (2) in der Antwort einen den empfangenen Verkehrsdaten zugeordneten Wahrscheinlichkeitswert empfängt.

8. Verfahren nach einem der Ansprüche 1 bis 7, bei dem das mobile Endgerät (2) die empfangenen Verkehrsdaten anzeigt.

9. Verfahren nach einem der Ansprüche 1 bis 8, bei dem das mobile Endgerät (2) eine Antwort mit Verkehrsdaten einer Mehrzahl von zu der Anfrage korrespondierenden Verkehrsmitteln (3) empfängt.

10. Verfahren nach einem der Ansprüche 1 bis 9, bei dem ein Betreiber des Mobilfunknetzes (1) den Server (4) als einen Knoten des Mobilfunknetzes (1) bereitstellt und der Server (4) die Verkehrsdaten von einer durch die Beschreibung bestimmten Datenbank (5) empfängt.

11. Verfahren nach Anspruch 10, bei dem die Verkehrsdaten eines öffentlichen Verkehrsmittels (3) ermittelt werden und ein Betreiber des öffentlichen Verkehrsmittels (3) die Datenbank (5) bereitstellt.

12. Verfahren nach Anspruch 10 oder 11, bei dem die Verkehrsdaten eines privaten Verkehrsmittels (3) ermittelt werden und ein Betreiber des privaten Verkehrsmittels (3) die Verbindungsdaten in der Datenbank (5) bereitstellt.

13. Verfahren nach einem der Ansprüche 10 bis 12, bei dem die bestimmte Datenbank (5) eine auf Echtzeit-Daten beruhende Antwort oder eine auf statischen Daten beruhende Antwort übermittelt.

14. System zum Ermitteln von Verkehrsdaten eines Verkehrsmittels (3), umfassend ein Mobilfunknetz (1), ein mobiles Endgerät (2) mit einer Kamera und einen mit dem Mobilfunknetz (1) verbundenen Server (4), wobei das System konfiguriert ist, ein Verfahren nach einem der Ansprüche 1 bis 13 auszuführen.

15. Computerprogrammprodukt, umfassend ein digitales Speichermedium mit einem Programmcode, der eine Rechenvorrichtung dazu veranlasst, zum Ermitteln von Verkehrsdaten eines Verkehrsmittels (3) an einem Verfahren nach einem der Ansprüche 1 bis 13 als der Server mitzuwirken, wenn es von einem Prozessor der Rechenvorrichtung ausgeführt wird.

## Geänderte Patentansprüche

### Geänderte Patentansprüche gemäss Regel 137(2) EPÜ.

1. Verfahren zum Ermitteln von Verkehrsdaten eines Verkehrsmittels (3), bei dem
- ein mit einem Mobilfunknetz (1) verbundenes mobiles Endgerät (2) eine einen gegenwärtigen Zeitpunkt und eine Position des mobilen Endgeräts (2) zu dem gegenwärtigen Zeitpunkt bestimmende Anfrage über das Mobilfunknetz (1) zu einem Server (4) übermittelt, den ein Betreiber des Mobilfunknetzes (1) als einen Knoten des Mobilfunknetzes (1) bereitstellt, und von dem Server (4) eine Antwort mit Verkehrsdaten eines zu der Anfrage korrespondierenden öffentlichen Verkehrsmittels (3) über das Mobilfunknetz (1) in Echtzeit empfängt;
- das mobile Endgerät (2) zu dem gegenwärtigen Zeitpunkt mittels einer Kamera des mobilen Endgeräts (2) ein Bild des Verkehrsmittels (3) erfasst, anhand des erfassten Bilds das Verkehrsmittel (3) erkennt und eine Beschreibung des erkannten Verkehrsmittels mit der Anfrage übermittelt; und
- der Server (4) die Verkehrsdaten von einer durch die Beschreibung bestimmten Datenbank (5) empfängt, die ein Betreiber des öffentlichen Verkehrsmittels (3) bereitstellt.

2. Verfahren nach Anspruch 1, bei dem das mobile Endgerät (2) die Beschreibung eines Straßenfahrzeugs, eines Schienenfahrzeugs, eines Wasserfahrzeugs und/oder ein Luftfahrzeugs übermittelt.

3. Verfahren nach Anspruch 1 oder 2, bei dem das mobile Endgerät (2) die Beschreibung anhand zweier erfasster Bilder bestimmt.

4. Verfahren nach einem der Ansprüche 1 bis 3, bei dem das mobile Endgerät (2) die Beschreibung mittels einer Orientierung des mobilen Endgeräts (2) bestimmt.

5. Verfahren nach einem der Ansprüche 1 bis 4, bei dem das mobile Endgerät (2) das Verkehrsmittel (3) anhand einer Auswahlmarkierung bestimmt.

6. Verfahren nach einem der Ansprüche 1 bis 5, bei dem das mobile Endgerät (2) einen Herkunftsort, einen dem Herkunftsort zugeordneten Startzeitpunkt, einen Zielort, einen dem Zielort zugeordneten Endzeitpunkt und/oder einen Identifikator des Verkehrsmittels (3) als die Verkehrsdaten empfängt.

7. Verfahren nach Anspruch 6, bei dem das mobile Endgerät (2) in der Antwort einen den empfangenen Verkehrsdaten zugeordneten Wahrscheinlichkeitswert empfängt.

8. Verfahren nach einem der Ansprüche 1 bis 7, bei dem das mobile Endgerät (2) die empfangenen Verkehrsdaten anzeigt.

9. Verfahren nach einem der Ansprüche 1 bis 8, bei dem das mobile Endgerät (2) eine Antwort mit Verkehrsdaten einer Mehrzahl von zu der Anfrage korrespondierenden Verkehrsmitteln (3) empfängt.

10. Verfahren nach einem der Ansprüche 1 bis 9, bei dem die Verkehrsdaten eines privaten Verkehrsmittels (3) ermittelt werden und ein Betreiber des privaten Verkehrsmittels (3) die Verbindungsdaten in der Datenbank (5) bereitstellt.

11. Verfahren nach einem der Ansprüche 1 bis 10, bei dem die bestimmte Datenbank (5) eine auf Echtzeit-Daten beruhende Antwort oder eine auf statischen Daten beruhende Antwort übermittelt.

12. System zum Ermitteln von Verkehrsdaten eines Verkehrsmittels (3), umfassend ein Mobilfunknetz (1), ein mobiles Endgerät (2) mit einer Kamera und einen mit dem Mobilfunknetz (1) verbundenen Server (4), das konfiguriert ist, ein Verfahren nach einem der Ansprüche 1 bis 11 auszuführen.

13. Computerprogrammprodukt, umfassend ein digitales Speichermedium mit einem Programmcode, der eine Rechenvorrichtung dazu veranlasst, zum Ermitteln von Verkehrsdaten eines Verkehrsmittels (3) an einem Verfahren nach einem der Ansprüche 1 bis 11 als der Server (5) mitzuwirken, wenn es von einem Prozessor der Rechenvorrichtung ausgeführt wird.
